# EUROPEAN PATENT APPLICATION

(11) **EP 4 785 784 A1**
(43) Date of publication of application: **05.08.2026**
(21) Application number: 25155581.9
(22) Date of filing: 03.02.2025
(51) Int. Cl.: A01K 29/00, A01K 11/00

(54) **FLIGHT DATA ANALYSIS SYSTEM FOR BIRDS**

(71) Applicant: Min Xin Technology Corp., Taichung City (TW)
(72) Inventor: Kao, Shu-Hui, Taichung City (TW)
(74) Representative: Petraz, Gilberto Luigi

(57) **Abstract**

A flight data analysis system for birds comprises a recording device (10) and a processing device (20). The recording device (10) is detachably mounted on a bird to compute and store multiple flapping values (S1) of the bird in a flight. The processing device (20) is electrically connected with the recording device (10) to receive the multiple flapping values (S1) and determines multiple motion states of the bird in the flight according to the multiple flapping values (S1).

## Description

### 1. Field of the Invention

The present invention relates to an analysis system, especially a flight data analysis system for birds.

### 2. Description of the Related Art

Among various bird species, pigeons have special faculties that allow them to travel between two distant points after training. The special faculties of pigeons are adapted to transmit messages, hold competitions, etc. Taking a pigeon competition as an example, an electronic foot ring may be set on each racing pigeon. The electronic foot ring is provided with a positioning component that can record a flight path of the racing pigeon from a starting position to a finishing position. Subsequently, an organizer of the competition reads information in the positioning components of the electronic foot rings of the racing pigeons to determine the fastest one arriving at the finishing position.

In order to achieve better results in the competition, pigeon owners usually release the pigeons for physical training before the competition, such as training the pigeons to fly around a pigeon loft, conducting simulated flights, etc. However, the conventional electronic foot rings lack components to detect motion states. As a result, the pigeon owners cannot effectively get the motion states of each pigeon during training processes, and further cannot understand habits and physical status of each participating pigeon and fail to adjust training contents of training processes in a timely manner.

Moreover, during the pigeon competition, the conventional electronic foot ring may fail with positioning because the positioning component in the conventional electronic foot ring mounted on each racing pigeon may be shielded by obstacles (such as jungles, buildings, etc.), so that the information stored in the positioning component is not continuous and has no-signal sections. As a result, the organizer of the competition cannot determine whether the racing pigeons are flying along a regular path by referring to the information of the no-signal sections. For example, the pigeon owners may induce their racing pigeons into a metal shield to block the signal of the positioning component, and use transportation tools to move their racing pigeons, so that the racing pigeons can move form a position A to a position B faster, thereby destroying fairness of the pigeon competition.

A conventional electronic foot ring for a racing pigeon only can sense positioning information of the racing pigeon in a flight, resulting in problems as described in the prior art. In view of this, the present invention provides a flight data analysis system for birds, comprising:
a recording device detachably mounted on a bird to sense multiple raw acceleration values of the bird during a flight and to compute and store multiple flapping values according to the multiple raw acceleration values; and
a processing device electrically connected with the recording device to receive the multiple flapping values, and to determine multiple motion states of the bird in the flight according to the multiple flapping values.

The recording device of the flight data analysis system for birds of the present invention is detachably mounted on the bird, and the recording device computes and stores the multiple flapping values of the bird in the flight. User can operate the processing device to electrically connect with the recording device. The processing device receives the multiple flapping values and determines multiple motion states of the bird in the flight according to the multiple flapping values. For example, the bird is a racing pigeon. For the pigeon owner, the pigeon owner can use the present invention to understand a proportion of the racing pigeon in the flying state during the flight, and then analyze the habits and physiological values of the racing pigeon to adjust training programs of the racing pigeon before a competition. For an organizer of the competition, the organizer of the competition can use the present invention to understand the motion states of the racing pigeon during the competition, and even combine positioning information of the racing pigeon to determine whether any cheating is involved.

### IN THE DRAWINGS

Fig. 1 is a circuit block diagram of a flight data analysis system for birds of the present invention;
Fig. 2 is a circuit block diagram of the flight data analysis system for birds of the present invention;
Fig. 3 is a schematic diagram of numerical distribution of raw acceleration values of the flight data analysis system for birds of the present invention;
Fig. 4A is a schematic diagram of numerical distribution of flapping values of the flight data analysis system for birds of the present invention; and
Fig. 4B is a schematic diagram of numerical distribution of acceleration values of the flight data analysis system for birds of the present invention.

In order to understand the technical characteristics and practical effects of the prevent invention in detail, and accomplish them according to the content of the present invention, the detailed description is as follows with the embodiments shown in the figures.

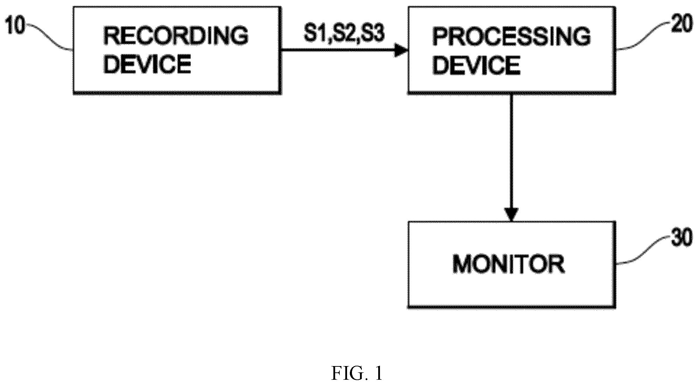

Referring to Fig. 1, a flight data analysis system for birds of the present invention comprises a recording device 10 and a processing device 20. The recording device 10 is detachably mounted on a bird. For example, the bird can be a racing pigeon, and the recording device 10 can be a racing pigeon foot ring (not be shown in Figures) and can be detachably mounted on a foot of the racing pigeon. How to install the racing pigeon foot ring on the racing pigeon is common knowledge in the technical field and is not the focus of the present invention. In short, the racing pigeon foot ring comprises a body and a movable member. One terminal of the movable member is pivotally connected with the body, and another terminal of the movable member can be operated to connect with the body. When the said another terminal of the movable member is connected with the body, an installation space is formed between the movable member and the body to facilitate installation of the foot ring on the foot of the racing pigeon.

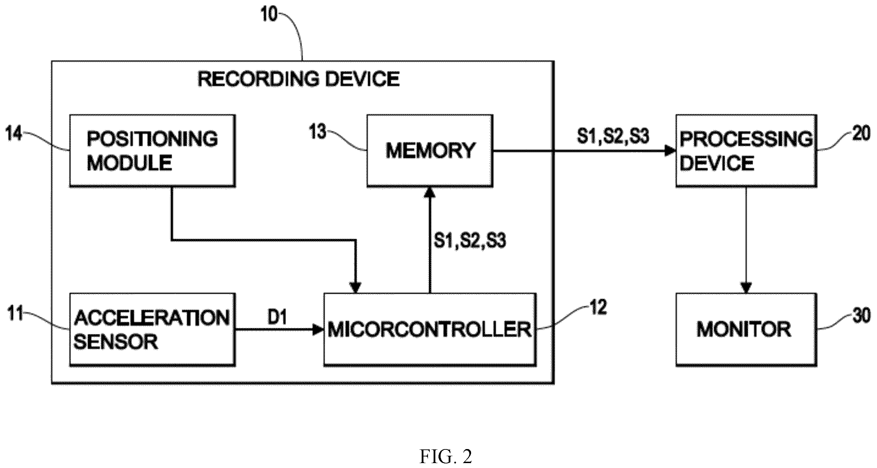

The recording device 10 senses multiple raw acceleration values (raw data) of the bird during a flight, and computes and stores multiple flapping values according to the multiple raw acceleration values. In particular, referring to Fig. 2, in an embodiment of the preset invention, the recording device 10 comprises an acceleration sensor 11, a microcontroller 12, and a memory 13. The microcontroller 12 is electrically connected with the acceleration sensor 11 and the memory 13. The acceleration sensor 11 senses the multiple raw acceleration values D1 of the bird during the flight. For example, the acceleration sensor 11 can be a three-axis acceleration sensor. The microcontroller 12 receives the multiple raw acceleration values D1 and computes the multiple flapping values S1 according to the multiple raw acceleration values D1. The microcontroller 12 transmits the multiple flapping values S1 to the memory 13, and the memory 13 receives and stores the multiple flapping values S1.

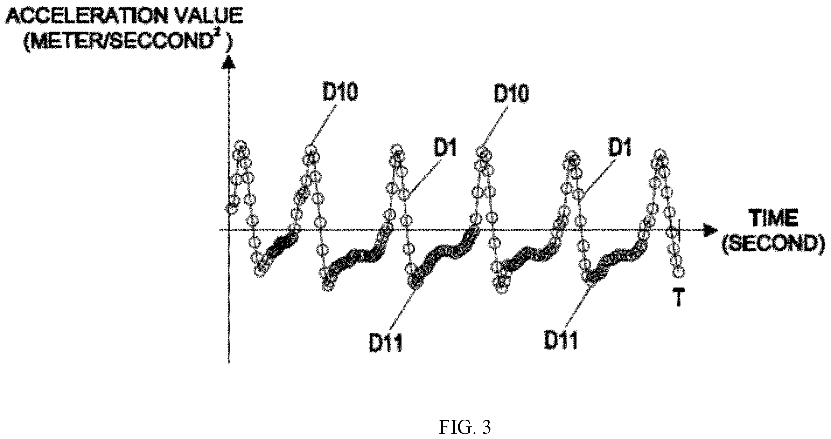

Specifically, the racing pigeon will flap its wings during the flight. Taking the Cartesian coordinate system as an example, a horizontal plane includes an X-axis and a Y-axis, and a Z-axis is perpendicular to the horizontal plane. When the racing pigeon flaps its wings, the racing pigeon's body moves up and down in the Z-axis direction and has an acceleration in the Z-axis direction. For example, Fig. 3 presents multiple raw acceleration values D1 in an axis (such as the Z-axis) detected by the acceleration sensor 11 in a unit time T (such as one second). Assuming the racing pigeon is flapping its wings during the unit time T, the multiple raw acceleration values D1 detected by the acceleration sensor 11 (the recording device 10) will include multiple positive values and multiple negative values. The multiple positive values and multiple negative values are continuously distributed and can form a numerical distribution pattern similar to a sine waveform. That is, the multiple raw acceleration values D1 include multiple peak values D10 and multiple trough values D11. The microcontroller 12 computes the multiple flapping values S1 according to a number of the multiple peak values D10. Referring to Fig. 3, in the unit time T, the multiple peak values include six peak values D10, so that a magnitude of the multiple flapping values S1 computed by the microcontroller 12 is six (times).

Since the recording device 10 operates by power of a battery during the flight of the bird, information computed by the recording device 10 can only be stored in the memory 13 during the flight of the bird. Therefore, the microcontroller 12 can be set to receive the multiple raw acceleration values D1 to compute the multiple flapping values S1 only when the microcontroller 12 is awakened. That is, user can set an interval time for the microcontroller 12 to wake up according to specifications of the battery and the memory 13. In other words, user can set a number of the multiple flapping values S1 to be stored for the recording device 10 during the flight.

Referring to Figs. 1 and 2, the processing device 20 is electrically connected with the recording device 10 to receive the multiple flapping values S1. For example, the processing device 20 can be a computer, a server, etc. The processing device 20 is electrically connected with the recording device 10 by a wired connection (such as by a network cable or a transmission line) or a wireless connection (such as by Bluetooth or Wi-Fi). The present invention is not limited to the foregoing examples. As mentioned above, the recording device 10 comprises the memory 13, so that the processing device 20 is electrically connected with the recording device 10 to receive the multiple flapping values S1, which means that the processing device 20 reads the multiple flapping values S1 stored in the memory 13.

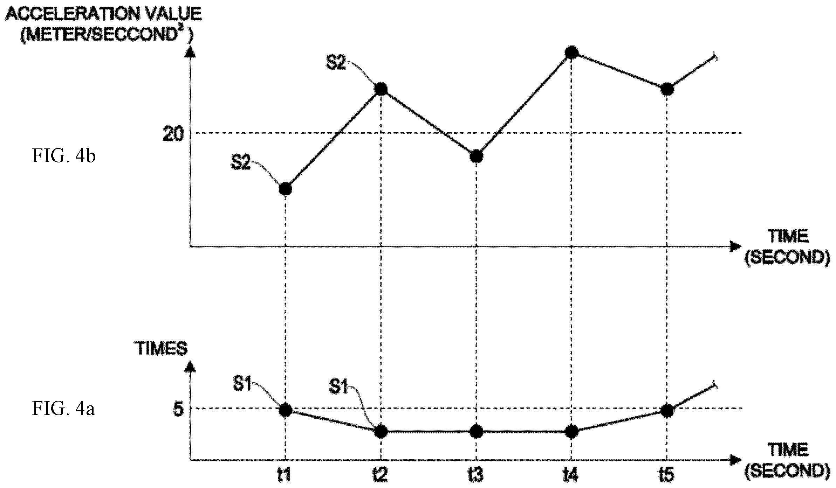

The processing device 20 determines multiple motion states of the bird during the flight according to the multiple flapping values S1. In particular, in an embodiment of the present invention, the flight includes multiple time points as shown in Fig. 4A, and each time point corresponds to one of the multiple flapping values S1. For example, the multiple time points include a first time point t1 and a second time point y2. The magnitude of the flapping value S1 corresponding to the first time point t1 is five (times), and the magnitude of the flapping value S1 corresponding to the second time point t2 is four (times).

The processing device 20 stores a flapping times threshold, and a magnitude of the flapping times threshold can be such as five (times). The processing device 20 determines the multiple motion states of the bird according to the flapping times threshold and the flapping value S1 corresponding to each time point. When the magnitude of the flapping value S1 corresponding to one of the multiple time points is greater than or equal to the magnitude of the flapping times threshold, the processing device 20 determines the bird is in a flying state at the time point. On the contrary, when the magnitude of the flapping value S1 corresponding to one of the multiple time points is less than the magnitude of the flapping times threshold, the processing devices 20 determines the bird is in a non-flying state at the time point. For example, the magnitude of the flapping value S1 corresponding to the first time point t1 is five times (greater than or equal to the magnitude of the flapping times threshold), the processing device 20 determines the bird is in the flying state at the first time point t1. The magnitude of the flapping value S1 corresponding to the second time point t2 is four times (less than the flapping times threshold), the processing device 20 determines the bird is in the non-flying state at the second time point t2.

The processing device 20 can also determine a motion state of the bird in a time period. Specifically, the multiple time points include a start time point and an end time point, and a time period is defined between the start time point and the end time point. For example, Fig. 4A presents multiple time points in a time period (the first time point t1 to a fifth time point t5). The first time point t1 is the start time point, and the fifth time point is the end time point. The processing device 20 can determine the motion state of the bird in the time period according to the flapping value S1 corresponding to each time point in the time period. The processing device 20 includes the following two determining ways.
1. Determining by average values: the processing device 20 computes an average value of the multiple flapping values S1 in the time period as a flapping average value. For example, the magnitudes of the multiple flapping values S1 corresponding to the first time point t1 to the fifth time point t5 respectively are "5,4,4,4,5", so that the flapping average value is 4.4 (times). The processing device 20 determines the motion state of the bird in the time period according to the flapping average value and the flapping times threshold. When the magnitude of the flapping average value is greater than or equal to the magnitude of the flapping times threshold, the processing device 20 determines the bird in the time period is in the flying state. On the contrary, when the magnitude of the flapping average value is less than the magnitude of the flapping times threshold, the processing device 20 determines the bird is in the non-flying state. As mentioned above, the flapping average value in the time period is 4.4, and the magnitude of the flapping average value is less than the magnitude of the flapping times threshold (five times). Therefore, the processing device 20 determines the bird in the time period is in the non-flying state.
2. Determining by proportional values: the processing device 20 computes a first proportion value and a second proportion value according to relationships between the flapping value S1 corresponding to each time point in the time period and the flapping times threshold, wherein the first proportion value is a proportion of the flapping values S1 in the time period that are greater than or equal to the flapping times threshold, and the second proportion value is a proportion of the flapping values S1 in the time period that are less than the flapping times threshold. For example, referring to Fig.4, the magnitudes of the flapping values corresponding to the first time point t1 and the fifth time point t5 respectively are "5" (greater than or equal to the flapping times threshold), and the magnitudes of the flapping values corresponding to the second time point t2 to the fourth time point t4 respectively are "4" (less than the flapping times threshold). Therefore, magnitudes of the first proportion value and the second proportion value respectively are 40% and 60%.

When the processing device 20 determines the magnitude of the first proportion value is greater than or equal to the magnitude of the second proportion value, the processing device 20 determines the bird in the time period is in the flying state. On the contrary, when the processing device 20 determines the magnitude of the first proportion value is less than the magnitude of the second proportion value, the processing device 20 determines the bird in the time period is in the non-flying state. As mentioned above, the magnitude of the first proportion value (40%) is less that the magnitude of the second proportion value (60%), so that the processing device 20 determines the bird in the time period is in the non-flying state.

In the present embodiment, the processing device 20 uses an acceleration value to determine the motion state of the bird at each time point. In particular, referring to Figs. 2, 4A, and 4B, the recording device 10 computes and stores multiple acceleration values S2 according to the multiple raw acceleration values D1. For example, after the microcontroller 12 in the recording device 10 receives the multiple raw acceleration values D1, the microcontroller 12 not only computes the flapping values S1, but also computes multiple average values of the multiple raw acceleration values D1 as the multiple acceleration values S2, wherein an acceleration value S2 represents the average value of the raw acceleration values D1 in the unit time T. The multiple acceleration values S2 correspond to the multiple time points. That is, each time point corresponds to one of the multiple acceleration values. For example, a magnitude of the acceleration value S2 computed by the recording device 10 according to the multiple raw acceleration values D1 in the unit time T at the first time point t1 is 17 (meter/seccond²), and the processing device 20 determines the motion state of the bird in the first time point t1 according to the flapping value S1 and the acceleration value S2 of the first time point t1.

Moreover, referring to Fig. 1, the recording device 10 records a plurality of positioning information S3 of the bird during the flight. Specifically, referring to Fig. 2, the recording device 10 further comprises a positioning module 14, such as a GPS module. The positioning module 14 is electrically connected with the microcontroller 12, and the positioning module 14 senses positions of the bird during the flight to generate the plurality positioning information S3. The microcontroller receives the plurality positioning information S3 and stores the plurality positioning information S3 into the memory 13. Each positioning information corresponds to one of the multiple time points. For example, positioning information of the first time point t1 is a first positioning information, and the first positioning information reflects that the bird is located at a first position at the first time point t1. Positioning information of the second time point t2 is a second positioning information, and the second positioning information reflects that the bird is located at a second position at the second time point t2.

The processing device 20 receives the plurality positioning information S3 and computes a flight speed of the bird at the time point corresponding to each positioning information S3 according to the plurality of positioning information S3. For example, the processing device 20 computes the flight speed of the bird at the second time point t2 according to the first positioning information and the second positioning information. The processing device 20 determines the multiple motion states of the bird at the multiple time points according to the flight speed of the time point corresponding to each positioning information S3 and the flapping value S1 corresponding to each time point.

In addition, referring to Figs. 1 and 2, the flight data analysis system for birds of the present invention further comprises a monitor 30. The monitor 30 is electrically connected with the processing device 20, and the monitor 30 receives and displays multiple determining results of the processing device 20. The multiple determining results correspond to the multiple motion states of the bird in the flight, for example, each determining result is corresponding to the motion state of the bird at each time point.

The recording device 10 of the flight data analysis system for birds of the present invention is detachably mounted on the bird, and the recording device 10 computes and stores the multiple flapping values S1 of the bird in the flight. User can operate the processing device 20 to electrically connect with the recording device 10. The processing device 20 receives the multiple flapping values S1 and determines multiple motion states of the bird in the flight according to the multiple flapping values S1. For example, the bird is a racing pigeon. For owner of the racing pigeon, owner of the racing pigeon can use the present invention to understand a proportion of the racing pigeon in the flying state during the flight, and then analyze the habits and physiological values of the racing pigeon to adjust training programs of the racing pigeon before a competition. For an organizer of the competition, the organizer of the competition can use the present invention to understand the motion states of the racing pigeon during the competition, and even combine positioning information of the racing pigeon to determine whether any cheating is involved.

The above only records the implementations or embodiments of the technical artifices adopted by the present invention to solve the problems, and is not configured to limit the claims of the present invention. That is, all equivalent changes and modifications that are consistent with the meaning of the claims of the present invention or made in accordance with the claims of the present invention are covered by the claims of the present invention.

## Claims

1. A flight data analysis system for birds, **characterized in that** the flight data analysis system for birds comprises:
a recording device (10) detachably mounted on a bird to sense multiple raw acceleration values (D1) of the bird during a flight and to compute and store multiple flapping values (S1) according to the multiple raw acceleration values (D1); and
a processing device (20) electrically connected with the recording device (10) to receive the multiple flapping values (S1), and to determine multiple motion states of the bird in the flight according to the multiple flapping values (S1).

2. The flight data analysis system for birds as claimed in claim 1, wherein the recording device (10) comprises:
an acceleration sensor (11) sensing the multiple raw acceleration values (D1) of the bird during the flight;
a microcontroller (12) electrically connected with the acceleration sensor (11) to receive the multiple raw acceleration values (D1), and to compute the multiple flapping values (S1) according to the multiple raw acceleration values (D1); and
a memory (13) electrically connected with the microcontroller (12) to receive and store the multiple flapping values (S1).

3. The flight data analysis system for birds as claimed in claim 2, wherein:
the multiple raw acceleration values (D1) include multiple peak values (D10), and the microcontroller (12) computes the multiple flapping values (S1) according to a number of the multiple peak values (D10).

4. The flight data analysis system for birds as claimed in claim 2, wherein:
the microcontroller (12) computes multiple average values of the multiple raw acceleration values (D1) as multiple acceleration values (S2).

5. The flight data analysis system for birds as claimed in claim 1, wherein:
the flight includes multiple time points, and each time point corresponds to one of the multiple flapping values (S1);
the processing device (20) stores a flapping times threshold and determines the motion state of the bird at each time point according to the flapping times threshold and the flapping value (S1) corresponding to each time point;
when a magnitude of the flapping value (S1) corresponding to one of the multiple time points is greater than or equal to a magnitude of the flapping times threshold, the processing device (20) determines the bird is in a flying state at the time point.

6. The flight data analysis system for birds as claimed in claim 5, wherein:
the recording device (10) computes and stores multiple acceleration values (S2) according to the multiple raw acceleration values (D 1), and each time point corresponds to one of the multiple acceleration values (S2);
the processing device (20) determines the motion state of the bird at each time point according to the flapping value (S 1) corresponding to each time point and the acceleration value (S2) corresponding to each time point.

7. The flight data analysis system for birds as claimed in claim 5, wherein:
the recording device (10) records a plurality of positioning information of the bird during the flight, and each positioning information corresponds to one of the multiple time points;
the processing device receives the plurality of positioning information (S3), computes a flight speed of the bird at the time point corresponding to each positioning information (S3) according to the plurality of positioning information (S3), and determines the multiple motion states of the bird at the multiple time points according to the flight speed of the time point corresponding to each positioning information (S3) and the flapping value (S 1) corresponding to each time point.

8. The flight data analysis system for birds as claimed in claim 5, wherein:
the multiple time points include a start time point and an end time point, and a time period is defined between the start time point and the end time point;
the processing device (20) computes an average value of the multiple flapping values (S 1) in the time period as a flapping average value, and determines the motion state of the bird in the time period according to the flapping average value and the flapping times threshold;
when a magnitude of the flapping average value is greater than or equal to the magnitude of the flapping times threshold, the processing device (20) determines the bird in the time period is in the flying state.

9. The flight data analysis system for birds as claimed in claim 5, wherein:
the multiple time points include a start time point and an end time point, and a time period is defined between the start time point and the end time point;
the processing device computes a first proportion value and a second proportion value according to relationships between the flapping value (S 1) corresponding to each time point in the time period and the flapping times threshold, wherein the first proportion value is a proportion of the flapping values (S 1) in the time period that are greater than or equal to the flapping times threshold, and the second proportion value is a proportion of the flapping values (S 1) in the time period that are less than the flapping times threshold;
when a magnitude of the first proportion value is greater than or equal to a magnitude of the second proportion value, the processing device (20) determines the bird in the time period is in the flying state.

10. The flight data analysis system for birds as claimed in claim 1 further comprising a monitor (30) connected with the processing device (20), wherein the monitor (30) receives and displays multiple determining results of the processing device (20), and the multiple determining results correspond to the multiple motion states of the bird in the flight.
